# FASCICULE DE BREVET EUROPEEN

(11) **EP 2 710 386 B1**
(45) Date de publication et mention de la délivrance du brevet: **14.03.2018**
(21) Numéro de dépôt: 12725519.8
(22) Date de dépôt: 16.05.2012
(51) Int. Cl.: G01Q 10/04

(54) **DISPOSITIF DE POSITIONNEMENT ULTRA-PRECIS D'UN ELEMENT ET SYSTEME DE POSITIONNEMENT COMPRENANT UN TEL DISPOSITIF.**
ULTRA-PRÄZISE POSITIONIERVORRICHTUNG UND DIESE POSITIONIERVORRICHTUNG ENTHALTENDES POSITIONIERSYSTEM
ULTRA-PRECISE ELEMENT POSITIONING DEVICE AND POSITIONING SYSTEM COMPRISING SAID DEVICE

(30) Priorité: 17.05.2011 FR 1154276
(43) Date de publication de la demande: 26.03.2014
(73) Titulaire: Concept Scientifique Instruments, 91940 Les Ulis (FR)
(72) Inventeur: LE COGUIEC, Alan, 92160 Antony (FR); PACHECO, Louis, 91620 La Ville Du Bois (FR)
(74) Mandataire: Gevers & Orès
(86) Numéro de dépôt international: PCT/IB2012/052468
(87) Numéro de publication internationale: WO 2012/156932

(56) Documents cités:
- EP-A1- 1 752 756
- DE-A1- 19 940 124
- US-A1- 2008 295 570

## Description

L'invention concerne un dispositif de positionnement ultra précis d'un élément.

L'invention concerne également un système de positionnement ultra-précis comportant un tel dispositif.

L'invention peut être appliquée dans de nombreux domaines.

A titre d'exemple non limitatif, on peut citer le domaine de la microscopie à force atomique.

Dans ce cas, l'élément à positionner correspond à une surface à analyser avec le microscope à force atomique. En effet, dans cette application, la pointe du microscope reste généralement fixe et la surface à analyser (échantillon) située en vis-à-vis de cette pointe est déplacée pour déterminer, par exemple, la topographie de cette surface aux échelles nanométriques.

Pour cette application, il est nécessaire d'effectuer un positionnement du plan de cette surface à analyser avec une grande précision.

La surface à analyser est en effet initialement assimilable à un plan défini par des axes X1, Y1 orthogonaux. Lorsque l'on cherche à analyser cette surface en la déplaçant, cette dernière doit être maintenue autant que possible dans une position se confondant avec le plan initial.

A défaut, la position relative de cette surface par rapport à la pointe du microscope à force atomique serait modifiée, par basculement de la surface à analyser vis-à-vis de l'axe de la pointe. La mesure de topographie de surface serait ainsi faussée lors du balayage de cette surface. L'axe de la pointe du microscope à force atomique doit donc rester, autant que possible, perpendiculaire aux axes X1, Y1 du plan définissant initialement la position de la surface à analyser.

Les documents US2008/0295570, DE 199 40 124 A1 et EP 1 752 756 A1 décrivent des dispositifs de positionnement ultra précis d'un élément. L'invention peut être appliquée à d'autres domaines que la microscopie à force atomique, domaines dans lesquels les contraintes de positionnement de l'élément à déplacer sont similaires.

On peut par exemple citer la profilométrie mécanique et/ou optique ou encore la nano-indentation.

Un objectif de l'invention est donc de proposer un dispositif de positionnement d'un élément répondant aux exigences mentionnées précédemment.

A cet effet, l'invention propose un dispositif de positionnement ultra-précis d'un élément selon la revendication 1. Le positionnement de l'élément peut ainsi s'effectuer de façon ultra-précise. Par exemple, l'élément peut conserver une planéité relative présentant une courbure de l'ordre de 40nm suivant un axe Z1 d'un repère orthogonal direct (X1, Y1, Z1) pour un déplacement de 80µm suivant l'axe de déplacement de l'élément, cet axe étant situé dans le plan défini par les axes X1, Y1 avec le premier mode de réalisation qui sera décrit ultérieurement. Les axes X1, Y1 définissent le plan dans lequel l'élément doit théoriquement se situer. Selon un deuxième mode de réalisation, cette courbure est de l'ordre de 12nm suivant cet axe Z1 pour un déplacement de 80µm suivant l'axe de déplacement de l'élément.

Le dispositif selon l'invention pourra également comprendre l'une au moins des caractéristiques suivantes, prises seules ou en combinaison :
- chaque lamelle souple présente une largeur comprise entre 30mm et 500mm ;
- chaque lamelle souple présente une hauteur comprise entre 15mm et 250mm ;
- le corps présente quatre faces latérales extérieures agencées les unes par rapport aux autres de sorte que les faces présentant une arête commune sont perpendiculaires l'une par rapport à l'autre;
- le dispositif comprend quatre lamelles ;
- chacune des quatre lamelles fait face à l'une des quatre faces latérales extérieures du corps ;
- le corps comprend un orifice central, lequel est susceptible de loger un moyen pour observer optiquement l'élément et/ou pour loger un moyen pour influer sur cet élément, par exemple optiquement thermiquement ou de façon magnétique ;
- l'une au moins des lamelles comprend des orifices ;
- chaque lamelle souple présente deux parties identiques comportant chacune une zone centrale et des extrémités d'épaisseur réduite par rapport à l'épaisseur de la zone centrale ;
- les extrémités présentent la forme d'un soufflet ;
- les orifices sont situés au niveau des extrémités d'épaisseur réduite de la ou chaque lamelle, lesdits orifices étant par exemple oblongs ;
- il est prévu des plaques, opposées entre elles par rapport au corps et chacune montée sur une lamelle, s'étendant le long du côté du corps sur une largeur l au moins égale à la moitié à la largeur l' de ce côté ;
- chaque plaque s'étend sur une largeur l sensiblement égale à celle l' d'un côté du corps ;
- chaque plaque s'étend sur une hauteur h au moins égale à la moitié de la hauteur du côté du corps.

L'invention propose également un système de positionnement ultra-précis d'un élément, caractérisé en ce qu'il comprend :
- un dispositif selon l'invention ;
- un premier moyen pour imprimer un mouvement de translation à la première tige, selon la direction de l'axe longitudinal de cette première tige ; et
- un deuxième moyen pour imprimer un mouvement de translation à la deuxième tige, selon la direction de l'axe longitudinal de cette deuxième tige.

Le système selon l'invention pourra également comprendre l'une au moins des caractéristiques suivantes, prises seules ou en combinaison :
- le premier moyen pour imprimer un mouvement de translation à la première tige comprend un premier actionneur, par exemple un actionneur piézoélectrique, et un premier moyen, fixé à la première tige, pour amplifier le mouvement du premier actionneur et le deuxième moyen pour imprimer un mouvement de translation à la deuxième tige comprend un deuxième actionneur, par exemple un actionneur piézoélectrique, et un deuxième moyen, fixé à la deuxième tige, pour amplifier le mouvement du deuxième actionneur ;
- le système comprend un premier bras de liaison entre le premier actionneur et le premier moyen pour amplifier le mouvement du premier actionneur et un deuxième bras de liaison entre le deuxième actionneur et le deuxième moyen pour amplifier le mouvement du deuxième actionneur, lesdits bras de liaison permettant notamment de déporter le positionnement de l'actionneur du côté opposé au moyen d'amplification du mouvement de l'actionneur au sein du système afin d'en faciliter le montage ;
- le système comprend des moyens pour positionner l'élément dans une direction (Z1) perpendiculaire aux directions des axes longitudinaux (X1, Y1) des tiges, lesdits moyens comprenant au moins un actionneur ;
- certaines lamelles du dispositif comprennent des moyens d'attache avec le bâti du système.

L'invention sera mieux comprise et d'autres buts, avantages et caractéristiques de celle-ci apparaîtront plus clairement à la lecture de la description qui suit et qui est faite au regard des figures annexées, sur lesquelles :
- la figure 1 représente, selon une vue en perspective, un exemple d'un dispositif de positionnement ultra-précis d'un élément, le dispositif étant représenté dans une position de repos ;
- la figure 2 représente une vue de dessus du dispositif représenté sur la figure 1, lorsque ce dispositif est dans une première position de travail ;
- la figure 3 représente une autre vue dessus du dispositif représenté sur la figure 1, lorsque ce dispositif est dans une deuxième position de travail ;
- la figure 4 représente une première vue en coupe d'un système de positionnement ultra-précis d'un élément, ce système comportant le dispositif représenté sur la figure 1;
- la figure 5 représente une deuxième vue en coupe du système représenté sur la figure 4 selon un plan de coupe perpendiculaire au plan de coupe pris en considération sur cette figure 4 ;
- la figure 6 est une représentation schématique selon une vue de côté, du dispositif représenté sur la figure 1 avec un moyen d'actionnement de ce dispositif appartenant au système représenté sur la figure 4 ;
- la figure 7 représente, selon une vue en perspective, un mode de réalisation conforme à l'invention d'un dispositif de positionnement ultra-précis d'un élément conforme à l'invention, le dispositif étant représenté dans une position de repos ;
- la figure 8 représente une vue de dessus du dispositif représenté sur la figure 7, lorsque ce dispositif est dans une première position de travail ;
- la figure 9 représente une autre vue dessus du dispositif représenté sur la figure 7, lorsque ce dispositif est dans une deuxième position de travail.

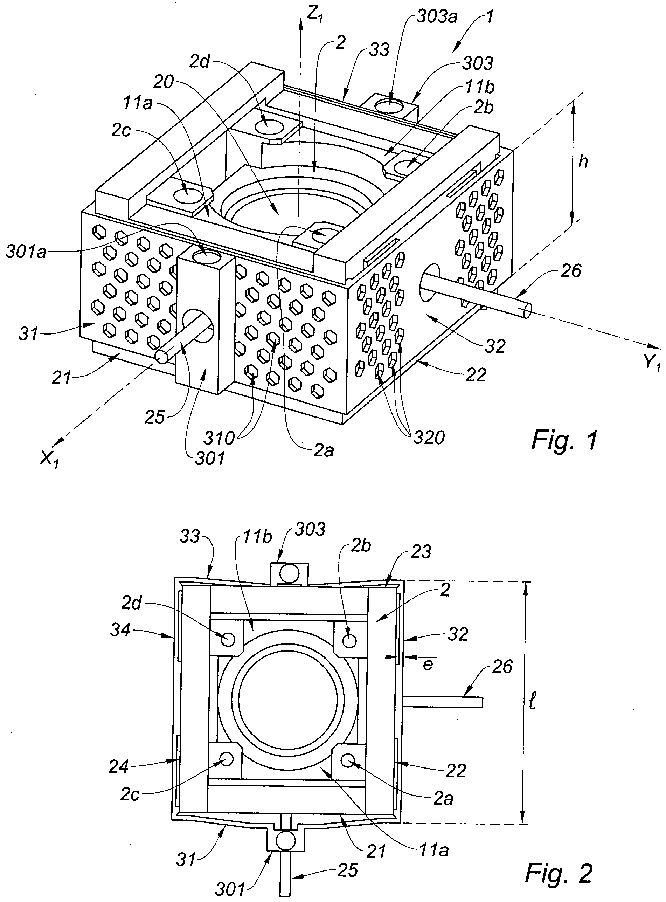

Nous allons tout d'abord décrire un exemple d'un dispositif de positionnement ultra-précis d'un élément à positionner, à l'appui des figures 1 à 3.

Sur ces figures, l'élément à positionner n'est pas représenté.

Le dispositif 1 présente une forme générale de parallélépipède, dont les dimensions extérieures peuvent par exemple être de 64mm x 57,5 mm x 25,5mm pour une application à un microscope à force atomique.

Le dispositif comprend un corps 2 comportant plusieurs faces extérieures latérales 21, 22, 23, 24. Ces faces extérieures latérales sont agencées les unes par rapport aux autres de sorte qu'elles sont perpendiculaires deux à deux. Plus précisément, les faces présentant une arête commune sont perpendiculaires l'une par rapport à l'autre.

Le dispositif 1 comprend également plusieurs lamelles souples 31, 32, 33, 34 fixées sur le corps 2, en l'occurrence au niveau des arêtes de certaines faces latérales extérieures du corps.

Chacune de ces lamelles souples fait face à l'une desdites faces latérales extérieures 21, 22, 23, 24 du corps 2. Le dispositif 1 comprend ainsi quatre lamelles, chacune d'entre elles faisant face à l'une des quatre faces latérales extérieures du corps. Les lamelles sont ainsi perpendiculaires entre elles deux à deux lorsqu'elles sont au repos. La position de repos des lamelles correspond à la position qu'elles adoptent naturellement lorsqu'elles ne sont soumises à aucun effort extérieur.

Le dispositif 1 comprend aussi deux tiges 25, 26 reliées au corps 2 et au centre d'une lamelle souple 31, 32 associée.

Par ailleurs, chacune de ces tiges 25, 26 s'étend perpendiculairement par rapport à la lamelle souple 31, 32 associée.

C'est le cas lorsque les lamelles sont au repos.

C'est aussi le cas lorsque les lamelles sont sollicitées par les tiges 25, 26, dans la mesure où la tige reste localement perpendiculaire à la lamelle au niveau de son point de fixation avec le centre de la lamelle.

On comprend ainsi que les axes longitudinaux des tiges 25, 26 sont perpendiculaires l'un par rapport à l'autre.

Le corps 2 comprend également un orifice central 20, traversant le dispositif 1 selon sa hauteur (axe Z1). Cet orifice central 20 permet de loger un moyen pour observer optiquement un échantillon, généralement en transmission. Dans le cas de l'application à un microscope à force atomique, l'échantillon correspond à l'élément à déplacer.

En variante ou en complément, cet orifice central 20 permet de loger un moyen pour influer sur cet échantillon, par exemple optiquement, thermiquement ou de façon magnétique.

Les lamelles souples 31, 32 permettent d'accompagner la tige 25, 26 associée dans un mouvement de translation de cette tige selon la direction de son axe longitudinal, lorsqu'un tel mouvement est imprimé à la tige 25, 26. Les moyens pour imprimer ce mouvement aux différentes tiges seront décrits plus amplement dans la suite de la description.

Le centrage de la tige 25, 26 sur la lamelle 31, 32 associée participe au guidage adéquat de la tige par la lamelle. En effet, on s'assure ainsi que la déformation de la lamelle est homogène lors du déplacement de la tige, ce qui favorise la translation de la tige le long de son axe longitudinal. L'axe longitudinal de la tige 25 se confond avec l'axe X1 du repère orthogonal direct (X1, Y1, Z1) et l'axe longitudinal de la tige 26 se confond avec l'axe Y1 de ce repère, comme représenté sur la figure 1.

Les lamelles souples 31, 32 présentent par ailleurs une épaisseur pouvant être comprise entre 0,5mm et 15mm, selon l'application envisagée. Par exemple, pour une application à un microscope à force atomique, on pourra prévoir une épaisseur de 0,5mm.

L'épaisseur des lamelles 31, 32 leur confère la souplesse adéquate pour que chacune d'elles accompagne la tige 25, 26 à laquelle elle est fixée dans son mouvement de translation longitudinal. Eventuellement, les lamelles 31, 32 peuvent prévoir des orifices 310, 320, avantageusement répartis uniformément par rapport au centre de la lamelle. Ces orifices 310, 320 permettent d'ajuster la souplesse des lamelles, sans modifier l'épaisseur de celles-ci.

Ceci est d'autant plus avantageux que ces lamelles seront de préférence réalisées par stéréolithographie, comme par ailleurs l'ensemble du dispositif 1.

En effet, le procédé de fabrication par stéréolithographie consiste à polymériser, par exemple par l'émission d'un laser émettant dans le domaine ultraviolet, un matériau liquide polymérisable afin de former des couches successives d'épaisseurs prédéfinies du dispositif 1 à fabriquer. La formation de ces couches successives s'effectue selon la direction de l'axe Z1 afin de former des strates liées. Cette technique est bien connue de l'homme du métier et ne sera pas décrite de façon plus détaillée.

Il convient cependant de noter que les techniques stéréolithographiques connues sont généralement limitées dans l'épaisseur des pièces qu'elles permettent de fabriquer. Ainsi, il est actuellement envisageable d'obtenir des lamelles dont l'épaisseur minimale est de 0,5mm.

Les orifices 310, 320 des lamelles permettent de contourner la limite minimale d'épaisseur d'une pièce pouvant être réalisée avec cette technique, dans l'objectif d'ajuster la souplesse/rigidité des lamelles.

Par ailleurs, les orifices 310, 320 permettent de contrôler et d'amplifier la souplesse des lamelles dans leur direction de déformation (axe X1 ou axe Y1 selon la tige 25, 26 considérée), tout en évitant de fragiliser mécaniquement celles-ci dans les autres directions.

Dans ce but, des orifices 310, 320 de forme alvéolaire sont particulièrement avantageux.

De plus, la forme alvéolaire des orifices 310, 320 présente d'autres avantages, par exemple par rapport à une forme cylindrique. La forme alvéolaire permet une élaboration plus précise de ces orifices, elle permet de maintenir plus facilement une distance inter-alvéolaire constante et enfin, elle permet une distribution plus homogène des efforts auxquels les lamelles seront soumises, notamment sous l'effet du déplacement des tiges 25, 26.

Bien entendu, la forme alvéolaire n'est pas obligatoire et une forme cylindrique des orifices 310, 320 ou d'autres formes pourraient être envisagées pour ajuster la souplesse des lamelles.

Les lamelles 31, 32 ainsi fabriquées améliorent le guidage de la tige 25, 26 dans la direction souhaitée.

La largeur l d'une lamelle 31, 32 pourra être comprise entre 30mm et 500mm, en fonction de l'application envisagée. Par exemple, pour une application au microscope à force atomique, on pourra prévoir une largeur de 45mm.

Cette largeur l est principalement dimensionnée en fonction du mouvement de translation susceptible d'être imprimé à chacune des tiges 25, 26, avec les moyens prévus à cet effet. En effet, la lamelle doit accompagner la tige dans son mouvement, sans entraver ce mouvement en raison d'une rigidité trop importante. On comprend que plus la largeur l de la lamelle est importante, plus la déformation de cette lamelle est susceptible d'être importante. De plus, la déformation des lamelles ne doit pas impliquer un dépassement de la limite élastique du matériau choisi pour ces lamelles.

La hauteur h d'une lamelle 31, 32 pourra quant à elle être comprise entre 15mm et 250mm, en fonction de l'application envisagée. Par exemple, pour une application au microscope à force atomique, on pourra prévoir une hauteur de 20mm.

La hauteur de la lamelle est choisie en fonction du poids de l'élément posé sur la platine 6 du système 100 auquel appartient le dispositif 1, de préférence de façon proportionnelle à ce poids.

Comme cela a été précisé précédemment, on peut ainsi envisager les dimensions suivantes pour les lamelles 31, 32: épaisseur de 0,5mm, hauteur de 20mm et largeur de 45mm, pour une application au microscope à force atomique.

Pour donner un autre exemple, on pourra multiplier ces valeurs d'un facteur 10 pour une application à la profilométrie mécanique et/ou optique.

Les autres lamelles souples 33, 34 du dispositif 1 sont quant à elles situées sur les faces latérales extérieures 23, 24, lesquelles sont respectivement parallèles aux faces latérales extérieures 21, 22 du corps 2. Ces lamelles souples 33, 34 sont donc opposées, par rapport au corps 2, aux lamelles souples 31, 32 respectivement, sur lesquelles les tiges 25, 26 sont fixées.

Les lamelles souples 33, 34 sont fixées respectivement aux extrémités du corps 2 et au centre du corps.

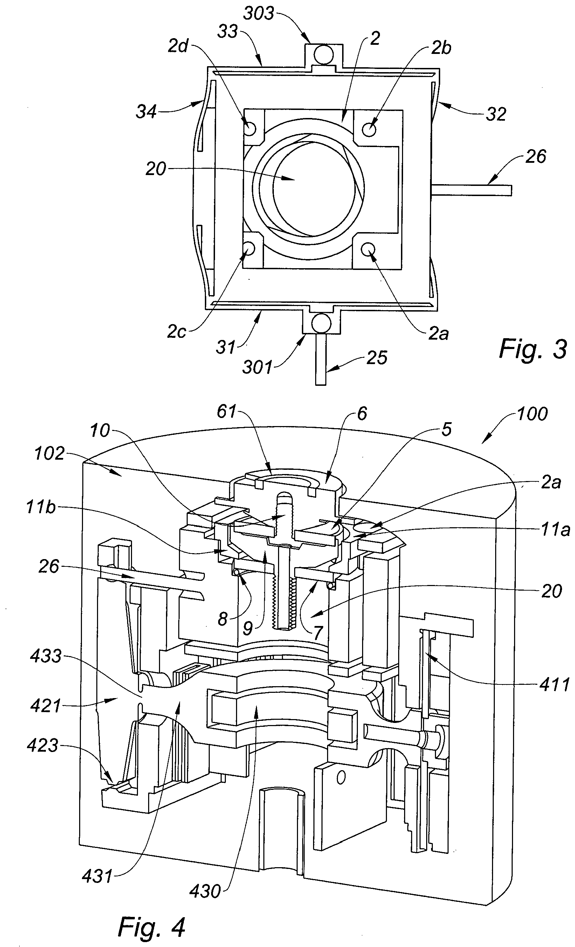

Ainsi, lorsque la tige 25 subit un mouvement de translation selon son axe longitudinal X1, le corps 2 entraîne avec lui la lamelle souple 33, opposée, par rapport au corps 2, à la lamelle souple 31 à laquelle la tige 25 est fixée (figure 2). De façon similaire, lorsque la tige 26 subit un mouvement de translation selon son axe longitudinal Y1, le corps 2 entraîne avec lui la lamelle souple 34, opposée, par rapport au corps 2, à la lamelle souple 32 à laquelle la tige 26 est fixée (figure 3).

Les lamelles souples 33, 34 peuvent présenter les mêmes caractéristiques que celles décrites précédemment pour les lamelles souples 31,32.

En particulier, les lamelles 31, 33 d'une part, qui sont destinées à fonctionner ensemble et les lamelles 32, 34 d'autre part, qui sont également destinées à fonctionner ensemble, peuvent être identiques deux à deux.

En effet, il est envisageable que la lamelle 31 (respectivement 32) et la lamelle 33 (respectivement 34) diffèrent en raison de leur principe de fixation avec le corps 2, afin de garder une homogénéité de résistance mécanique axiale.

Les lamelles souples 33, 34 participent également au guidage adéquat des tiges 25, 26 dans leur mouvement de translation le long de leurs axes longitudinaux respectifs.

En effet, lorsque la tige 25 est mise en mouvement, la partie du corps 2 située à l'opposé de la tige 25 subit un moment fléchissant qui est contrecarré par la lamelle souple 33. Sans cette lamelle souple 33, on ne pourrait donc pas s'assurer du guidage ultra-précis de la tige 25 dans son mouvement de translation selon sa direction longitudinale X1.

Comme on peut le constater sur la figure 2, laquelle concerne une simulation par éléments finis du comportement du dispositif 1, lorsqu'un mouvement de translation est imprimé à la tige 25 selon son axe longitudinal X1, on obtient ainsi une déformation symétrique des lamelles 31, 33 assurant le guidage ultra-précis souhaité.

Une remarque similaire peut être faite sur l'intérêt de la lamelle 34, vis-à-vis du guidage de la tige 26. Une simulation par éléments finis du comportement du dispositif 1 lorsqu'un mouvement de translation est imprimé à la tige 26 selon son axe longitudinal Y1, est représentée sur la figure 3.

Il convient de noter que le dispositif 1 selon l'invention pourrait être réalisé selon d'autres variantes de réalisation.

Ce qui importe pour l'invention est d'une part, la position relative des tiges 25, 26 par rapport aux lamelles 31, 32 (perpendicularité, centrage) sur lesquelles elles sont montées et d'autre part, la position des lamelles entre elles (perpendicularité au repos). En effet, ce sont les lamelles 31 à 34 qui vont guider les tiges 25, 26 pour maintenir l'élément dans un plan, de manière ultra-précise.

Ainsi, le corps 2 pourrait présenter une autre forme que celle qui est représentée sur les figures annexées, non parallélépipédique.

Nous allons maintenant décrire le système 100 de positionnement ultra-précis de l'élément, évoqué précédemment, à l'appui des figures 4 à 6.

Le système 100 de positionnement ultra-précis de l'élément considéré comprend le dispositif 1 décrit précédemment.

Le dispositif 1 est monté sur le bâti 101 du système 100 par l'intermédiaire de moyens d'attache 301, 303 formés, respectivement, sur la lamelle 31 et sur la lamelle 33. A cet effet, chaque moyen d'attache 301, 303 comprend, à chacune de ses extrémités, un orifice 301a, 301b, 303a, 303b permettant de recevoir un moyen complémentaire relié au bâti 101 du système 100. Le dispositif 1 est ainsi parfaitement maintenu par rapport au bâti 101 du système 100, ce mode d'attache n'entravant pas le mouvement du corps 2 du dispositif 1.

Les orifices 301a, 301b, 303a, 303b peuvent présenter une forme conique ou avantageusement, pyramidale, afin de mieux contraindre en rotation les attaches entre le dispositif 1 et le bâti 101 du système 100.

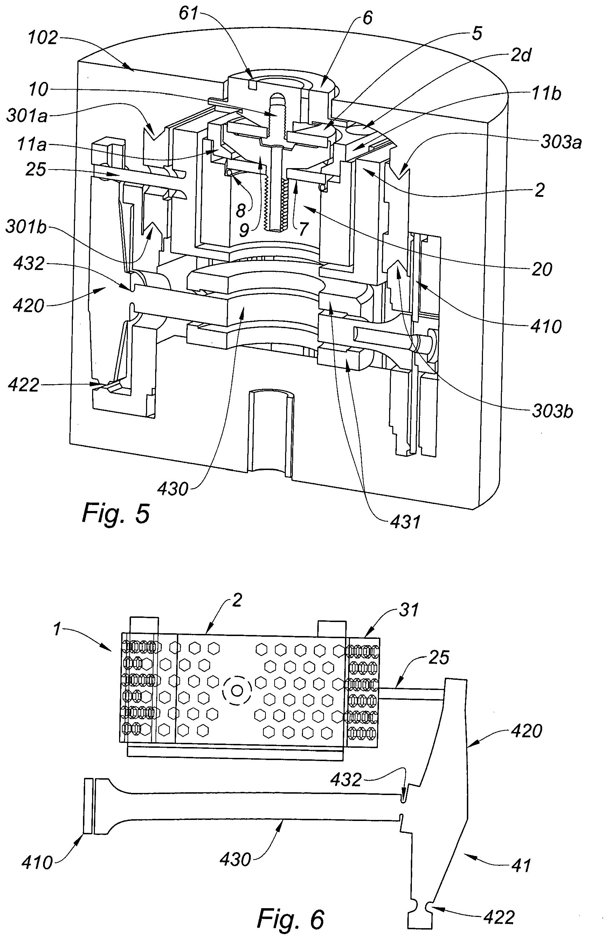

Le système 100 comprend également un premier moyen 41 pour imprimer un mouvement de translation à la première tige 25, selon la direction de l'axe longitudinal X1 de cette première tige 25 (figures 5 et 6).

Ce premier moyen 41 pour imprimer un mouvement de translation à la première tige 25 comprend un premier actionneur 410 et un premier moyen 420, fixé à la première tige 25, pour amplifier le mouvement du premier actionneur 410.

Plus précisément, l'actionneur 410 peut être un actionneur piézoélectrique transmettant un mouvement mécanique sous l'effet d'une sollicitation électrique au moyen d'amplification 420 formé par un bras de levier. L'actionneur 410 agit avantageusement au centre du bras de levier 420, lequel est fixé à la tige 25 par l'une de ses extrémités pour amplifier le déplacement généré par l'actionneur 410. Pour assurer le mouvement basculant du bras de levier 420, ce dernier est monté, par son autre extrémité, au bâti 101 du système 100, par l'intermédiaire d'une liaison pivot 422.

Avantageusement, et comme représenté sur les figures 4 à 6, le système 100 comprend un premier bras de liaison 430 entre l'actionneur 410 et le bras de levier 420. Dans ce cas, l'actionneur 410 fait face à une première extrémité du bras de liaison 430, l'autre extrémité de ce bras de liaison 430 étant montée par une liaison pivot 432 au centre du bras de levier 420.

Le bras de liaison 430 permet de déporter le positionnement de l'actionneur 410 du côté opposé au bras de levier 420, par rapport au système 100, et ce, afin de faciliter le montage de cet actionneur 410.

Ce bras de liaison 430 est facultatif.

On pourrait donc prévoir de disposer l'actionneur 410 du même côté que le bras de levier 420, au sein du système 100.

Des moyens similaires sont prévus pour le déplacement de la tige 26 (figure 4).

Ainsi, le système 100 comprend un deuxième moyen 42 pour imprimer un mouvement de translation à la deuxième tige 26, selon la direction de l'axe longitudinal Y1 de cette deuxième tige 26.

Ce deuxième moyen 42 pour imprimer un mouvement de translation à la deuxième tige 26 comprend un deuxième actionneur 411 et un deuxième moyen 421, fixé à la deuxième tige 26, pour amplifier le mouvement du deuxième actionneur 411.

Plus précisément, l'actionneur 411 peut être un actionneur piézoélectrique transmettant un mouvement mécanique sous l'effet d'une sollicitation électrique au moyen d'amplification 421 formé par un bras de levier. L'actionneur 411 agit avantageusement au centre du bras de levier 421, lequel est fixé à la tige 26 par l'une de ses extrémités pour amplifier le déplacement généré par l'actionneur 411. Pour assurer le mouvement basculant du bras de levier 421, ce dernier est monté, par son autre extrémité, au bâti 101 du système 100 par l'intermédiaire d'une liaison pivot 423.

Avantageusement, et comme représenté sur les figures 4 et 5, le système 100 comprend un deuxième bras de liaison 431 entre l'actionneur 411 et le bras de levier 421. Dans ce cas, l'actionneur 411 fait face à une première extrémité du bras de liaison 431, l'autre extrémité de ce bras de liaison 431 étant montée par une liaison pivot 433 au centre du bras de levier 421.

Là également, le bras de liaison 431 permet de déporter le positionnement de l'actionneur 411 du côté opposé au bras de levier 421, par rapport au système 100, et ce, afin de faciliter le montage de cet actionneur 411.

Le bras de liaison 431 étant facultatif, on pourrait donc prévoir de disposer l'actionneur 411 du même côté que le bras de levier 421, au sein du système 100.

Toutefois, lorsque les bras de liaison 430, 431 sont prévus, il convient de noter que la forme de ces bras de liaison n'est pas identique. En effet, ces bras de liaison se croisent si bien que, pour permettre leur déplacement respectif sans gêne, le deuxième bras de levier 431 présente une structure doublée entourant le premier bras de levier 430 (figure 4). Cette structure doublée permet par ailleurs d'avoir un deuxième bras de levier 431 symétrique, qui permet de transmettre au mieux les efforts provenant du deuxième actionneur 411 selon l'axe longitudinal du bras de liaison 431.

Avec la conception prévue pour le système 100, il est donc possible de déplacer un élément de façon ultra-précise selon deux directions perpendiculaires l'une par rapport à l'autre, par ailleurs de façon indépendante. Il est donc possible d'assurer un déplacement ultra-précis de cet élément (par exemple une surface à analyser avec un microscope à force atomique) dans un plan, afin que cet élément reste dans ce plan quelle que soit sa position.

Par ailleurs, les moyens 41, 42 pour imprimer un mouvement de translation aux tiges 25, 26 permettent de contrôler précisément le déplacement de la tige dans ce plan. En effet, il n'existe aucun jeu entre l'actionneur 410, 411 et la tige 25, 26 si bien que le déplacement généré par l'actionneur, lequel peut être réalisé très précisément avec un actionneur piézoélectrique par exemple, implique un déplacement également très précis de la tige 25, 26 associée. La précision du déplacement imprimé à l'élément sera finalement gérée par le choix du type d'actionneur 410, 420.

Il convient en outre de noter que le système 100 comprendra avantageusement des moyens pour déplacer l'élément selon l'axe Z1.

Ces moyens comprennent un actionneur 5, par exemple un actionneur piézoélectrique, pour déplacer une platine 6 selon cet axe Z1. Il convient de noter que la face supérieure 61 de cette platine 6 affleure, au repos (c'est-à-dire lorsque l'actionneur 5 n'est pas sollicité), la face supérieure 102 de l'enveloppe du système 100. La face 102 du système est celle contre laquelle l'élément à déplacer est destinée à venir en appui.

Les figures 4 et 5 représentent un montage particulier pour ces différents moyens sur le corps 2 du dispositif 1.

Ce montage comprend un premier actionneur 7 en appui sur un contour intérieur du corps 2, avantageusement par l'intermédiaire d'un joint torique 8.

Le premier actionneur 7 permet de supporter une pièce de support 9, servant au support du deuxième actionneur 5 et de la platine 6. Le fait de prévoir plusieurs actionneurs 5, 7 permet d'obtenir un déplacement plus important suivant l'axe Z1.

A cet effet, la platine 6 est montée sur une vis 10 dont la tête est logée entre le deuxième actionneur 5 et la pièce de support 9.

Par ailleurs, ce montage comprend des pièces de fixation latérales 11a, 11b du premier actionneur 7 et de la pièce de support 9. Il convient de noter que, dans ce montage, les pièces de fixations latérales 11a, 11 b sont munies d'orifices 2a, 2b, 2c, 2d permettant de recevoir un moyen d'attache avec la platine 6.

Un autre montage pourrait être envisagé.

En effet, ce qui importe c'est que la platine 6 soit rigidement liée a l'actionneur 5 qui lui-même sera liée au corps 2, tout comme les tiges 25 et 26, l'élément à positionner étant en contact avec la platine 6.

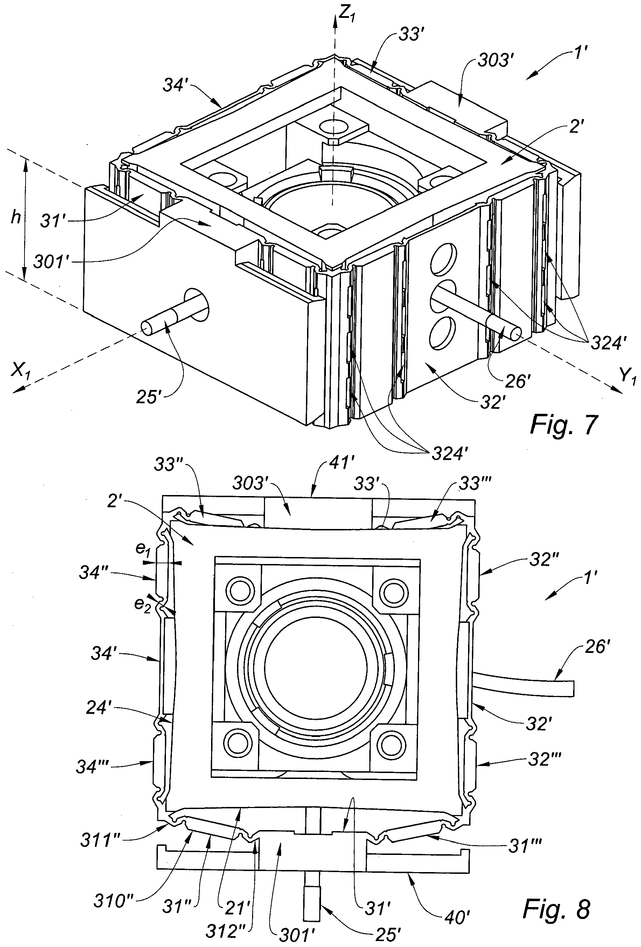

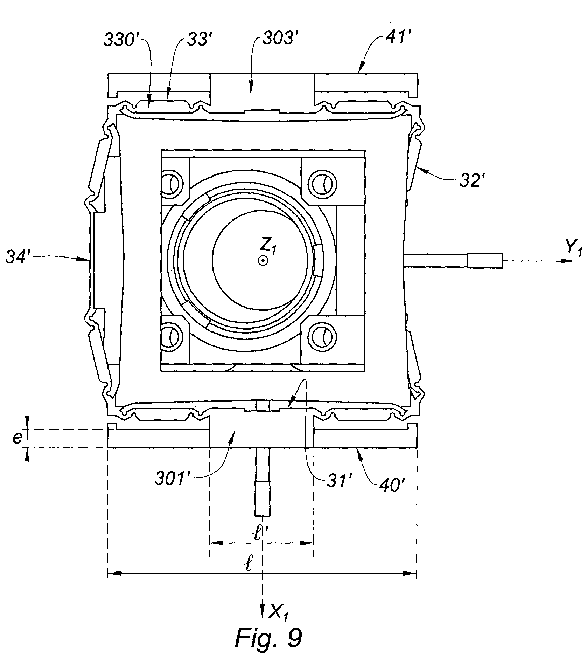

Nous allons maintenant décrire un mode de réalisation d'un dispositif de positionnement ultra-précis d'un élément à positionner, conforme à l'invention, à l'appui des figures 7 à 9.

Ce mode de réalisation reprend, pour l'essentiel, les caractéristiques de l'exemple précèdent. Cependant, la forme des lamelles souples 31', 32', 33', 34' est différente de celles des lamelles souples 31, 32, 33, 34 du dispositif selon l'exemple précèdent. Dans ce mode de réalisation, les lamelles souples ne présentent pas une épaisseur constante.

En effet, chaque lamelle souple 31', 32', 33', 34' comprend deux parties 31", 31''', 32", 32''', 33", 33"' et 34", 34''' disposées symétriquement par rapport au plan de coupe du dispositif 1' qui est perpendiculaire à la lamelle concernée et passe par le centre de celle-ci.

Les deux parties 31", 31''' d'une lamelle 31' sont donc identiques.

Si l'on prend l'exemple de la lamelle 31', la partie 31" comprend une zone centrale 310" et des extrémités 311", 312" présentant une épaisseur réduite par rapport à l'épaisseur de la zone centrale 310".

L'une 311" de ces extrémités est fixée au niveau d'une arête commune entre deux face extérieures 21', 24' du corps 2'.

L'autre 312" de ces extrémités rejoint une partie centrale (non référencée) de la lamelle qui est reliée au corps 2'. Dans le cas d'espèce, cette partie centrale de la lamelle 31' est montée fixe en son centre par rapport à l'une 25' des deux tiges 25', 26' reliées au corps 2'.

Une description similaire peut être faite pour la lamelle 32'.

Pour les lamelles 33', 34', une description similaire peut également être effectuée, à l'exception de la présence d'une tige. La lamelle 34' est par ailleurs avantageusement fixée en son centre sur le corps 2'. Cela peut être également le cas pour la lamelle 33'.

Il convient de noter que les deux parties 31", 31" d'une lamelle 31' pourraient être assimilées ou fabriquées comme deux lamelles indépendantes, sans que leur fonctionnement ne soit modifié.

Ainsi, lors du déplacement, la zone centrale de la lamelle souple, épaisse par rapport à ses extrémités d'épaisseur réduite ne se déforme pas. La déformation de la lamelle s'effectue donc par l'intermédiaire de la déformation desdites extrémités d'épaisseur réduite.

A cet effet et à titre d'exemple pour une application AFM, l'épaisseur e₁ de la zone centrale d'une lamelle peut être comprise entre 1,5mm et 5mm et l'épaisseur e₂ d'une extrémité d'épaisseur réduite comprise entre 0,5mm et 1 mm.

Il convient cependant de noter que la largeur et la hauteur des lamelles 31', 32', 33', 34' peuvent être identiques à celles des lamelles 31, 32, 33, 34 du dispositif 1 selon le premier mode de réalisation.

Par ailleurs, afin de faciliter cette déformation, les extrémités d'épaisseur réduite de la lamelle présentent avantageusement une forme de soufflet.

La forme particulière des lamelles 31', 32', 33', 34' du dispositif 1' permet d'améliorer l'ultra précision du dispositif 1', par rapport au dispositif 1 du premier mode de réalisation.

Avantageusement, le dispositif 1' comprendra une autre différence par rapport au dispositif 1 de l'exemple précèdent. Cette autre différence concerne la présence de plaques 40', 41' opposées entre elles par rapport au corps 2'.

Ces plaques 40', 41' sont montées à l'extérieur des lamelles 31', 33' et reliées à ces lamelles par l'intermédiaire de moyens d'attache 301', 303' du dispositif 1' avec le bâti du système 100 décrit précédemment. Les moyens d'attache 301', 303' comprennent donc chacun un orifice (non représenté, équivalent dans sa fonction à la fonction remplie par les orifices 301a, 301b, 303a, 303b du premier mode de réalisation) permettant de recevoir un moyen complémentaire relié au bâti du système 100.

On comprend donc que le dispositif 1' selon ce mode de réalisation est tout à fait adapté à sa mise en place dans le système 100 décrit précédemment à l'appui des figures 4 à 6. La description du système 100 est donc adaptée pour sa mise en oeuvre avec le dispositif 1'.

Chaque plaque 40', 41' présente une épaisseur e permettant d'assurer son absence de déformation. Par exemple, on peut envisager une épaisseur minimum de 2mm.

Par ailleurs, on pourra prévoir que la hauteur h de la plaque soit au moins égale à la moitié de la hauteur du côté du corps 2'/dispositif 1'.

Avantageusement, la hauteur h de la plaque 40', 41' sera sensiblement égale à la hauteur de ce côté. En effet, plus la hauteur h est importante et plus le mouvement de l'élément à déplacer est plan dans le plan (X1, Y1) (les axes X1, Y1 définissent le plan dans lequel l'élément doit théoriquement se situer). Ceci permet de diminuer, notamment vis-à-vis du premier mode de réalisation, la rotation des lamelles autours des axes X1 et Y1.

En pratique, chaque plaque 40', 41' pourra présenter une hauteur h comprise entre 10mm et 50mm.

On pourra également prévoir que chaque plaque 40', 41' présente une largeur l supérieure à celle l' du moyen d'attache 301', 303'. Ceci permet de diminuer, par rapport au premier mode de réalisation, la rotation des lamelles autour de l'axe Z1.

Ainsi, on pourra prévoir que la largeur l de chaque plaque 40', 41' est au moins égale à la moitié à la largeur l' d'un côté du corps 2'/dispositif 1'. Avantageusement, et comme représenté sur les figures 7 à 9 annexées, chaque plaque 40', 41' présentera une largeur sensiblement égale à celle d'un côté du dispositif 1' afin d'optimiser l'effet de cette plaque sur la limitation de la rotation des lamelles autour de l'axe Z1 et par suite, de la rotation de l'élément à déplacer autour de cet axe.

Les plaques 40', 41' permettent donc encore d'améliorer l'ultra-précision du dispositif 1'.

Ainsi, avec le mode de réalisation tel que représenté sur les figures 7 à 9 annexées, l'élément à déplacer peut conserver une planéité relative présentant une courbure de l'ordre de 12nm suivant un axe Z1 du repère orthogonal direct (X1, Y1, Z1) pour un déplacement de 80µm suivant l'axe de déplacement de l'élément, cet axe étant situé dans le plan défini par les axes X1, Y1.

Afin d'ajuster la souplesse des lamelles 31', 32', 33', 34' sans modifier leur épaisseur, il est envisageable de prévoir des orifices dans celles-ci. Compte tenu de la forme spécifique de ces lamelles, ces orifices sont disposés dans les extrémités d'épaisseur réduites de la lamelle concernée. En effet, dans ce mode de réalisation, ce sont ces extrémités d'épaisseur réduite qui sont susceptibles de se déformer.

Par exemple, la figure 7 montre des orifices 324' situés sur la lamelle 32'. Dans le cas d'espèce, chaque extrémité d'épaisseur réduite de la lamelle est munie de plusieurs orifices oblongs, mais d'autres formes pourraient être envisagées.

Préférentiellement, ces orifices sont régulièrement répartis autour, ou plus précisément ici de part et d'autre, du centre de la lamelle pour s'assurer d'un guidage le plus plan possible de l'élément à déplacer.

La présence d'orifices 324' est particulièrement avantageuse pour améliorer la souplesse des lamelles. C'est en particulier le cas lorsque les lamelles seront réalisées par stéréolithographie pour les raisons déjà décrites précédemment.

D'ailleurs, les lamelles 31', 32', 33', 34' et plus généralement le dispositif 1' dans son ensemble seront avantageusement réalisées avec un polymère, par voie stéréolithographique.

A cet égard, il convient par ailleurs de noter que les épaisseurs des lamelles 31', 32', 33', 34' précisées précédemment sont fournies pour un matériau polymère.

## Revendications

1. Dispositif (1') de positionnement ultra-précis d'un élément, comprenant :
- un corps (2') ;
- plusieurs lamelles souples (31', 32', 33', 34') en matériau polymère fixées sur le corps (2'), ces lamelles étant, lorsqu'elles sont au repos, perpendiculaires l'une par rapport à l'autre deux à deux, chaque lamelle souple (31', 32', 33', 34') présentant par ailleurs une partie centrale reliée au corps (2'), deux parties identiques (31", 31''') disposées symétriquement par rapport au plan de coupe du dispositif (1') qui est perpendiculaire à la lamelle concernée et passe par le centre de celle-ci, lesdites deux parties identiques (31", 31''') comportant chacune une zone centrale (310") et des extrémités (311", 312") d'épaisseur réduite par rapport à l'épaisseur de la zone centrale (310"), l'une (311") desdites extrémités étant fixée au niveau d'une arête commune entre deux face extérieures (21', 24') dudit corps (2') et l'autre (312") desdites extrémités rejoignant ladite partie centrale de ladite lamelle;
- deux tiges (25', 26') reliant chacune le corps (2') à une lamelle souple (31', 32') associée, de telle manière que ladite partie centrale est montée fixe en son centre par rapport à l'une (25') desdites tiges (25', 26'), chaque tige étant disposée en passant par le centre de la lamelle et perpendiculairement à cette lamelle de sorte que les tiges (25', 26') sont perpendiculaires entre elles ;
les lamelles souples (31', 32', 33', 34') opposées entre elles par rapport au corps (2') permettant ainsi d'accompagner la tige (25', 26') associée dans un mouvement de translation de cette tige selon la direction de son axe longitudinal, lorsqu'un tel mouvement est imprimé à la tige.

2. Dispositif (1') selon la revendication 1, dans lequel chaque lamelle souple présente une largeur comprise entre 30mm et 500mm.

3. Dispositif (1') selon l'une des revendications précédentes, dans lequel chaque lamelle souple présente une hauteur comprise entre 15mm et 250mm.

4. Dispositif (1') selon l'une des revendications précédentes, dans lequel le corps (2') présente quatre faces latérales extérieures (21', 22', 23', 24') agencées les unes par rapport aux autres de sorte que les faces présentant une arête commune sont perpendiculaires l'une par rapport à l'autre.

5. Dispositif (1') selon l'une des revendications précédentes, dans lequel il est prévu quatre lamelles (31', 32', 33', 34').

6. Dispositif (1') selon la revendication précédente, dans lequel chacune des quatre lamelles fait face à l'une des quatre faces latérales extérieures du corps.

7. Dispositif (1') selon l'une des revendications précédentes, dans lequel le corps (2') comprend un orifice central (20), lequel est susceptible de loger un moyen pour observer optiquement l'élément et/ou pour loger un moyen pour influer sur cet élément, par exemple optiquement thermiquement ou de façon magnétique.

8. Dispositif (1') selon l'une des revendications précédentes, dans lequel l'une au moins des lamelles comprend des orifices (324').

9. Dispositif (1') selon l'une des revendications précédentes, dans lequel les extrémités (311 ", 312") d'une lamelle, d'épaisseur réduite par rapport à l'épaisseur de la zone centrale, présentent la forme d'un soufflet.

10. Dispositif (1') selon l'une des revendications précédentes, dans lequel les orifices (324') sont situés au niveau des extrémités d'épaisseur réduite de la ou chaque lamelle, lesdits orifices étant par exemple oblongs.

11. Dispositif (1') selon l'une des revendications précédentes, dans lequel il est prévu des plaques (40', 41'), opposées entre elles par rapport au corps (2') et chacune montée sur une lamelle (31', 33'), s'étendant le long du côté du corps (2') sur une largeur l au moins égale à la moitié à la largeur l' de ce côté.

12. Dispositif (1') selon la revendication précédente, dans lequel chaque plaque (40', 41') s'étend sur une largeur l sensiblement égale à celle l' d'un côté du corps (2').

13. Dispositif (1') selon l'une des revendications 11 ou 12, dans lequel chaque plaque (40', 41') s'étend sur une hauteur h au moins égale à la moitié de la hauteur du côté du corps (2').

14. Système (100) de positionnement ultra-précis d'un élément, **caractérisé en ce qu'**il comprend :
- un dispositif (1') selon l'une des revendications précédentes;
- un premier moyen (41) pour imprimer un mouvement de translation à la première tige (25'), selon la direction de l'axe longitudinal de cette première tige ; et
- un deuxième moyen (42) pour imprimer un mouvement de translation à la deuxième tige (26'), selon la direction de l'axe longitudinal de cette deuxième tige.

15. Système selon la revendication précédente, dans lequel :
- le premier moyen (41) pour imprimer un mouvement de translation à la première tige (25') comprend un premier actionneur (410), par exemple un actionneur piézoélectrique, et un premier moyen (420), fixé à la première tige (25'), pour amplifier le mouvement du premier actionneur (410);
- le deuxième moyen (42) pour imprimer un mouvement de translation à la deuxième tige (26, 26') comprend un deuxième actionneur (411), par exemple un actionneur piézoélectrique, et un deuxième moyen (421), fixé à la deuxième tige (26, 26'), pour amplifier le mouvement du deuxième actionneur (420).

16. Système selon la revendication précédente, dans lequel il est prévu un premier bras de liaison (430) entre le premier actionneur (410) et le premier moyen (420) pour amplifier le mouvement du premier actionneur (410) et un deuxième bras de liaison (431) entre le deuxième actionneur (411) et le deuxième moyen (421) pour amplifier le mouvement du deuxième actionneur (411), lesdits bras de liaison (430, 431) permettant notamment de déporter le positionnement de l'actionneur (410, 411) du côté opposé au moyen d'amplification (420, 421) du mouvement de l'actionneur au sein du système afin d'en faciliter le montage.

17. Système selon l'une des revendications 13 à 15, dans lequel il est prévu des moyens (5, 6, 7, 8, 9, 10, 11) pour positionner l'élément dans une direction (Z1) perpendiculaire aux directions des axes longitudinaux (X1, Y1) des tiges (25', 26'), lesdits moyens comprenant au moins un actionneur (5, 7).

18. Système selon l'une des revendications 13 à 16, dans lequel certaines lamelles (31', 33') du dispositif (1') comprennent des moyens d'attache (301', 303') avec le bâti (101) du système (100).

## Patentansprüche

1. Vorrichtung (1') zum ultra-präzisen Positionieren eines Elements, umfassend:
- ein Gehäuse (2');
- mehrere nachgiebige Plättchen (31', 32', 33', 34') aus Polymermaterial, die am Gehäuse (2') befestigt sind, wobei diese Plättchen, wenn sie in Ruhe sind, zweierweise zueinander senkrecht sind, wobei jedes nachgiebige Plättchen (31', 32', 33', 34') darüber hinaus aufweist einen mittleren Teil, der mit dem Gehäuse (2') verbunden ist, zwei identische Teile (31", 31'''), die in Bezug auf die Schnittebene der Vorrichtung (1'), die zu dem betreffenden Plättchen senkrecht ist und durch die Mitte desselben verläuft, symmetrisch angeordnet sind, wobei die zwei identischen Teile (31", 31''') jeder einen mittleren Bereich (310") und Enden (311", 312") von in Bezug auf die Dicke des mittleren Bereichs (310") verringerter Dicke umfassen, wobei eines (311") der Enden im Bereich einer gemeinsamen Kante zwischen zwei Außenflächen (21', 24') des Gehäuses (2') befestigt ist, und das andere (312") der Enden in den mittleren Teil des Plättchens übergeht;
- zwei Stangen (25', 26'), die jede das Gehäuse (2') derart mit einem zugehörigen nachgiebigen Plättchen (31', 32') verbinden, dass der mittlere Teil in seiner Mitte in Bezug auf eine (25') der Stangen (25', 26') fest montiert ist, wobei jede Stange durch die Mitte des Plättchens hindurchgehend und senkrecht zu diesem Plättchen angeordnet ist, sodass die Stangen (25', 26') zueinander senkrecht sind;
wobei die in Bezug auf das Gehäuse (2') einander gegenüberliegenden nachgiebigen Plättchen (31', 32', 33', 34') es so ermöglichen, die zugehörige Stange (25', 26') in einer Translationsbewegung dieser Stange gemäß der Richtung ihrer Längsachse zu begleiten, wenn der Stange eine solche Bewegung vermittelt wird.

2. Vorrichtung (1') gemäß Anspruch 1, wobei jedes nachgiebige Plättchen eine Breite im Bereich zwischen 30 mm und 500 mm aufweist.

3. Vorrichtung (1') gemäß einem der vorstehenden Ansprüche, wobei jedes nachgiebige Plättchen eine Höhe im Bereich zwischen 15 mm und 250 mm aufweist.

4. Vorrichtung (1') gemäß einem der vorstehenden Ansprüche, wobei das Gehäuse (2') vier seitliche Außenflächen (21', 22', 23', 24') aufweist, die so zueinander angeordnet sind, dass die Flächen, die eine gemeinsame Kante aufweisen, zueinander senkrecht sind.

5. Vorrichtung (1') gemäß einem der vorstehenden Ansprüche, wobei vier Plättchen (31', 32', 33', 34') vorgesehen sind.

6. Vorrichtung (1') gemäß dem vorstehenden Anspruch, wobei jedes der vier Plättchen einer der vier seitlichen Außenflächen des Gehäuses zugewandt ist.

7. Vorrichtung (1') gemäß einem der vorstehenden Ansprüche, wobei das Gehäuse (2') eine mittlere Öffnung (20) umfasst, die in der Lage ist, ein Mittel aufzunehmen, um das Element optisch zu beobachten, und/oder ein Mittel aufzunehmen, um dieses Element zum Beispiel optisch, thermisch oder magnetisch zu beeinflussen.

8. Vorrichtung (1') gemäß einem der vorstehenden Ansprüche, wobei mindestens eines der Plättchen Öffnungen (324') umfasst.

9. Vorrichtung (1') gemäß einem der vorstehenden Ansprüche, wobei die Enden (311", 312") eines Plättchens, die in Bezug auf die Dicke des mittleren Bereichs von verringerter Dicke sind, die Form eines Balges aufweisen.

10. Vorrichtung (1') gemäß einem der vorstehenden Ansprüche, wobei die Öffnungen (324') im Bereich der Enden von verringerter Dicke des oder jedes Plättchens liegen, wobei die Öffnungen zum Beispiel länglich sind.

11. Vorrichtung (1') gemäß einem der vorstehenden Ansprüche, wobei Plättchen (40', 41') vorgesehen sind, die einander in Bezug auf das Gehäuse (2') gegenüberliegen und jede an einem Plättchen (31', 33') montiert sind, wobei sie sich entlang der Seite des Gehäuses (2') über eine Breite l von mindestens gleich der Hälfte der Breite l' dieser Seite erstrecken.

12. Vorrichtung (1') gemäß dem vorstehenden Anspruch, wobei sich jedes Plättchen (40', 41') über eine Breite l erstreckt, die im Wesentlichen derjenigen l' einer Seite des Gehäuses (2') gleich ist.

13. Vorrichtung (1') gemäß einem der Ansprüche 11 oder 12, wobei sich jedes Plättchen (40', 41') über eine Höhe h von mindestens gleich der Hälfte der Höhe der Seite des Gehäuses (2') erstreckt.

14. System (100) zum ultra-präzisen Positionieren eines Elements, **dadurch gekennzeichnet, dass** es umfasst:
- eine Vorrichtung (1') gemäß einem der vorstehenden Ansprüche;
- ein erstes Mittel (41), um der ersten Stange (25') eine Translationsbewegung gemäß der Richtung der Längsachse dieser ersten Stange zu vermitteln; und
- ein zweites Mittel (42), um der zweiten Stange (26') eine Translationsbewegung gemäß der Richtung der Längsachse dieser zweiten Stange zu vermitteln.

15. System gemäß dem vorstehenden Anspruch, wobei:
- das erste Mittel (41), um der ersten Stange (25') eine Translationsbewegung zu vermitteln, einen ersten Aktor (410) umfasst, zum Beispiel einen piezoelektrischen Aktor, und ein erstes Mittel (420), das an der ersten Stange (25') befestigt ist, um die Bewegung des ersten Aktors (410) zu verstärken;
- das zweite Mittel (42), um der zweiten Stange (26, 26') eine Translationsbewegung zu vermitteln, einen zweiten Aktor (411) umfasst, zum Beispiel einen piezoelektrischen Aktor, und ein zweites Mittel (421), das an der zweiten Stange (26, 26') befestigt ist, um die Bewegung des zweiten Aktors (420) zu verstärken.

16. System gemäß dem vorstehenden Anspruch, wobei ein erster Verbindungsarm (430) zwischen dem ersten Aktor (410) und dem ersten Mittel (420), um die Bewegung des ersten Aktors (410) zu verstärken, vorgesehen ist, und ein zweiter Verbindungsarm (431) zwischen dem zweiten Aktor (411) und dem zweiten Mittel (421), um die Bewegung des zweiten Aktors (411) zu verstärken, wobei es die Verbindungsarme (430, 431) insbesondere ermöglichen, die Positionierung des Aktors (410, 411) von der dem Verstärkungsmittel (420, 421) der Bewegung des Aktors gegenüberliegenden Seite in das Innere des Systems zu verlagern, um dessen Montage zu erleichtern.

17. System gemäß einem der Ansprüche 13 bis 15, wobei Mittel (5, 6, 7, 8, 9, 10, 11) vorgesehen sind, um das Element in einer Richtung (Z1) senkrecht zu den Richtungen der Längsachsen (X1, Y1) der Stangen (25', 26') zu positionieren, wobei die Mittel mindestens einen Aktor (5, 7) umfassen.

18. System gemäß einem der Ansprüche 13 bis 16, wobei gewisse Plättchen (31', 33') der Vorrichtung (1') Mittel zum Festmachen (301', 303') am Rahmen (101) des Systems (100) umfassen.

## Claims

1. Device (1') for ultra-precise positioning of an element, comprising
- a body (2');
- several flexible plates (31', 32', 33', 34') made of polymer material fixed on the body (2'), these plates, when at rest, being perpendicular to one another in pairs, each flexible plate (31', 32', 33', 34') also having a central part attached to the body (2'), two identical parts (31", 31''') arranged symmetrically relative to the cutting plane of the device (1') that is perpendicular to the plate in question and passes through the centre of the latter, said two identical parts (31", 31''') each comprising a central zone (310") and ends (311", 312") with reduced thickness relative to the thickness of the central zone (310"), one (311") of said ends being fixed at the level of a common edge between two outer faces (21', 24') of said body (2') and the other one (312") of said ends joining said central part of said plate;
- two rods (25', 26') connecting each body (2') to an associated flexible plate (31', 32') in such a way that said central part is mounted fixed at its centre relative to one (25') of said rods (25', 26'),
each rod being arranged to pass through the centre of the plate and perpendicularly to this plate so that the rods (25', 26') are perpendicular to one another;
the flexible plates (31', 32', 33', 34') opposite to one another relative to the body (2') thus making it possible to accompany the associated rod (25', 26') in a movement of translation of this rod in the direction of its longitudinal axis, when such a movement is imparted to the rod.

2. Device (1') according to claim 1, wherein each flexible plate has a width between 30mm and 500mm.

3. Device (1') according to one of the preceding claims, wherein each flexible plate has a height between 15mm and 250mm.

4. Device (1') according to one of the preceding claims, wherein the body (2') has four outer side faces (21', 22', 23', 24') arranged relative to one another in such a way that the faces having a common edge are perpendicular to one another.

5. Device (1') according to one of the preceding claims, wherein four plates (31', 32', 33', 34') are provided.

6. Device (1') according to the preceding claim, wherein each of the four plates faces one of the four outer side faces of the body.

7. Device (1') according to one of the preceding claims, wherein the body (2') comprises a central hole (20), which is able to house a means for optically observing the element and/or to house a means for exerting an influence on this element, for example optically, thermally or magnetically.

8. Device (1') according to one of the preceding claims, wherein at least one of the plates comprises holes (324').

9. Device (1') according to one of the preceding claims, wherein the ends (311", 312") of a plate, of reduced thickness relative to the thickness of the central zone, are in the form of bellows.

10. Device (1') according to one of the preceding claims, wherein the holes (324') are located at the level of the ends of reduced thickness of the or each plate, said holes being for example oblong.

11. Device (1') according to one of the preceding claims, wherein plates (40', 41') are provided, opposite to one another relative to the body (2') and each mounted on a plate (31', 33'), extending along the side of the body (2') over a width 1 at least equal to half the width l' of this side.

12. Device (1') according to the preceding claim, wherein each plate (40', 41') extends over a width l roughly equal to the width l' of one side of the body (2').

13. Device (1') according to one of the claims 11 or 12, wherein each plate (40', 41') extends over a height h at least equal to half the height of the side of the body (2').

14. System (100) for ultra-precise positioning of an element, **characterized in that** it comprises:
- a device (1') according to one of the preceding claims;
- a first means (41) for imparting a movement of translation to the first rod (25'), in the direction of the longitudinal axis of this first rod; and
- a second means (42) for imparting a movement of translation to the second rod (26'), in the direction of the longitudinal axis of this second rod.

15. System according to the preceding claim, wherein:
- the first means (41) for imparting a movement of translation to the first rod (25') comprises a first actuator (410), for example a piezoelectric actuator, and a first means (420), fixed to the first rod (25'), for amplifying the movement of the first actuator (410);
- the second means (42) for imparting a movement of translation to the second rod (26, 26') comprises a second actuator (411), for example a piezoelectric actuator, and a second means (421), fixed to the second rod (26, 26'), for amplifying the movement of the second actuator (420).

16. System according to the preceding claim, wherein a first linkage (430) is provided between the first actuator (410) and the first means (420) for amplifying the movement of the first actuator (410) and a second linkage (431) is provided between the second actuator (411) and the second means (421) for amplifying the movement of the second actuator (411), said linkages (430, 431) notably making it possible to offset the positioning of the actuator (410, 411) on the opposite side to the amplifying means (420, 421) of the movement of the actuator within the system in order to facilitate installation thereof.

17. System according to one of claims 13 to 15, wherein means (5, 6, 7, 8, 9, 10, 11) are provided for positioning the element in a direction (Z1) perpendicular to the directions of the longitudinal axes (X1, Y1) of the rods (25', 26'), said means comprising at least one actuator (5, 7).

18. System according to one of claims 13 to 16, wherein certain plates (31', 33') of the device (1') comprise means for attachment (301', 303') to the frame (101) of the system (100).
